# EUROPEAN PATENT SPECIFICATION

(11) **EP 3 836 112 B1**
(45) Date of publication and mention of the grant of the patent: **21.08.2024**
(21) Application number: 19214511.8
(22) Date of filing: 09.12.2019
(51) Int. Cl.: G08G 1/00, G08G 1/01

(54) **A METHOD FOR OPERATING A TRANSPORTATION SYSTEM**
VERFAHREN ZUM BETRIEB EINES TRANSPORTSYSTEMS
PROCÉDÉ DE FONCTIONNEMENT D'UN SYSTÈME DE TRANSPORT

(43) Date of publication of application: 16.06.2021
(73) Proprietor: Ningbo Geely Automobile Research & Development Co. Ltd., Hangzhou Bay New District Ningbo 315336 (CN); Zhejiang Geely Holding Group Co., Ltd., Hangzhou, Zhejiang 310051 (CN)
(72) Inventor: BRANDIN, Magnus, 435 38 MÖLNLYCKE (SE); BÖLANDER, Markus, 411 19 GÖTEBORG (SE); SÖDERLUND, Markus, 443 51 LERUM (SE); OLSSON, Vanessa, 417 55 GÖTEBORG (SE)
(74) Representative: Zacco Sweden AB

(56) References cited:
- JP-A- 2016 146 130
- US-A1- 2011 184 596
- US-A1- 2018 082 590

## Description

### TECHNICAL FIELD

The invention relates to a method for operating a transportation system and a control system for controlling vehicles of a transportation system.

### BACKGROUND

Today's transportation or traffic systems for transporting passengers have a relatively low capacity and public transport timetables often cannot be kept without delays. One way of trying to increase the capacity of the total traffic flow is to organize the vehicles in vehicle platoons, where each vehicle platoon has a lead vehicle and a plurality of following vehicles driving in a convoy after the lead vehicle.

There is however still a need for optimizing the use of such vehicle platoons and enabling vehicle platoons to pass bottlenecks of a road network in an effective way for providing a relatively high throughput of vehicle platoons.

Document US2018/082590 describes a method for controlling vehicles at a bottleneck by forming platoons of vehicles waiting at the bottleneck for passing through the bottleneck. The spacing and density of the vehicles in the platoons prevent vehicles from changing lanes.

### SUMMARY

An objective of the invention is to provide a method for operating a transportation system, by which method the throughput of vehicle platoons through a road network bottleneck can be increased.

The objective is achieved by a method for operating a transportation system according to claim 1.

The invention is based on the insight that by such a method, it is possible to provide a relatively high flow of vehicle platoons through a road network bottleneck, since by use of the control system for synchronization of the vehicle platoons the time gap between the vehicle platoons can be minimized and the driving can be planned for maintaining a relative high speed and avoiding any stoppage of any vehicle platoon. The time, speed and position of the vehicles platoons can be synchronized by the control system. This will also save energy since any deceleration and acceleration of the vehicle platoons required for passing the bottleneck section, can be minimized.

Further, it can be ensured that the first vehicle platoon will enter the single lane before the second vehicle platoon in a safe way.

According to a further embodiment of the method, the method comprises the step of positioning the first vehicle platoon in front of the second vehicle platoon by increasing the speed of the first vehicle platoon relative to the speed of the second vehicle platoon before the bottleneck section by increasing the speed of the first vehicle platoon and/or decreasing the speed of the second vehicle platoon. Hereby, the first vehicle platoon can be positioned in front of the second vehicle platoon immediately before the bottleneck section.

According to a further embodiment of the method, the method comprises the step of controlling the relative speed between the first vehicle platoon and the second vehicle platoon, and the positions of the first vehicle platoon and the second vehicle platoon relative to each other, based on the length of the first vehicle platoon, before reaching the bottleneck section. Hereby, the throughput can be optimized at the same time as safety can be ensured.

According to a further aspect of the invention, a further objective of the invention is to provide a control system for controlling vehicles of a transportation system, by which control system the throughput of vehicle platoons through a road network bottleneck can be increased.

The objective is achieved by a control system for controlling vehicles of a transportation system according to claim 4.

In addition, the invention relates to a transportation system comprising a first vehicle platoon and a second vehicle platoon, and such a control system.

The advantages of the control system and the transportation system are similar to the advantages already discussed hereinabove with reference to some embodiments of the method.

Further advantages and advantageous features of the invention are disclosed in the following description and in the claims.

### BRIEF DESCRIPTION OF THE DRAWINGS

With reference to the appended drawings, below follows a more detailed description of embodiments of the invention cited as examples.

In the drawings:
- Fig. 1: shows a vehicle platoon, and
- Fig. 2: shows a transportation system with vehicle platoons and a control system for controlling the vehicle platoons.

### DETAILED DESCRIPTION OF EXAMPLE EMBODIMENTS

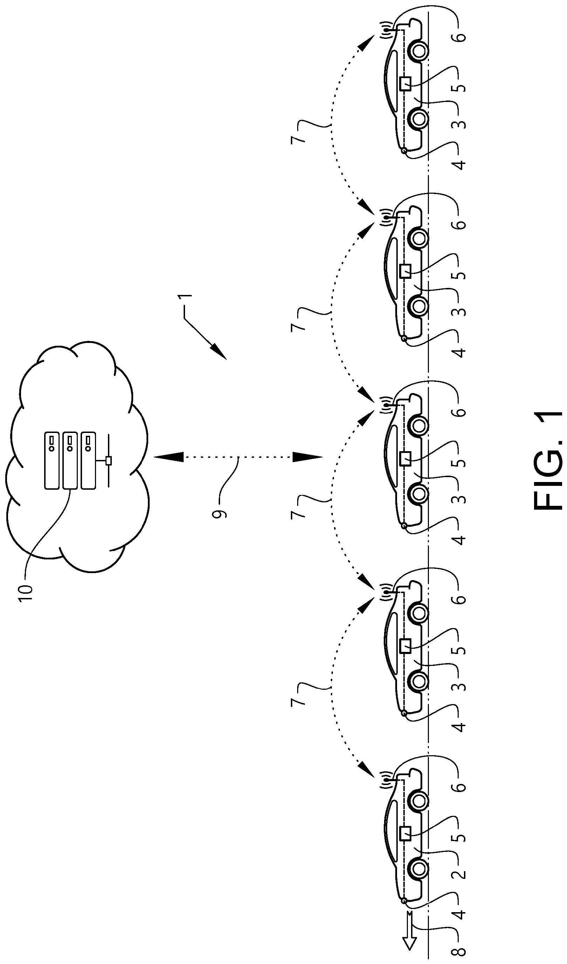

Fig. 1 shows a vehicle platoon 1 having a lead vehicle 2 and a plurality of following vehicles 3. The lead vehicle 2 and the following vehicles 3 are individual vehicles but driven together as a group or convoy. The following vehicles 3 are positioned in a line after the lead vehicle 2. The driving direction is indicated with an arrow 8. The lead vehicle 2 can be a so called autonomous or self-driving vehicle, or the lead vehicle 2 can be at least partly controlled by an operator of the lead vehicle. The following vehicles 3 of the vehicle platoon are suitably automatically controlled without any driver assistance. The vehicle platoon is suitably used for transportation of passengers of the vehicles, though the vehicles can also be used for transporting goods.

When driving in the vehicle platoon 1, the following vehicles 3 are controlled to follow the lead vehicle 2 or the vehicle closest to the front, such that when the speed of the lead vehicle 2 is increased/decreased the speed of the following vehicles 3 is increased/decreased correspondingly for maintaining or achieving the desired distances and time gaps between the vehicles. Further, when the lead vehicle 2 is changing driving direction, a following vehicle 3 will also change driving direction and follow the lead vehicle or rather the vehicle closest to the front.

For enabling the vehicles 2, 3 to be controlled, each vehicle can be provided with any suitable sensor equipment 4 for receiving information about the environment, and a control unit 5 for controlling the vehicle. The sensor equipment gives information about at least the vehicle closest to the front, but preferably the sensor equipment is covering 360 degrees around the vehicle for obtaining the information that is required for longitudinal and lateral control of the vehicle. Such sensor equipment 4 may comprise lidar, radar and ultrasonic sensors, cameras, etc. The information received by the sensor equipment is used by the control unit 5 for controlling the driving behaviour of the vehicle. In addition, maps, GPS, etc., can be used for determining the current position of a vehicle platoon or an individual vehicle of a vehicle platoon.

Alternatively or in addition to the sensor equipment 4, each vehicle 2, 3 is provided with a communication unit 6 for communicating with one or more of the other vehicles of the vehicle platoon 1. Such a communication unit 6 may comprise any suitable components for establish communication between the vehicles. For example, the communication unit 6 may comprise a transmitter and a receiver based on radio waves or microwaves. In other words, each vehicle can be part of a local network for communication 7 between the vehicles of the vehicle platoon 1. By means of the local network, control signals can be transmitted from one vehicle to another vehicle. The control signals received are then used by the control unit 5 arranged on the vehicle for controlling the driving behaviour of the vehicle. Such control signals received by the following vehicles 3 are preferably at least initially provided by the lead vehicle 2.

Such a vehicle platoon 1 of a transportation system is suitably part of a central network for communication 9 between the vehicle platoon 1 and a central control unit 10. By means of the central network, control signals can be transmitted from the central control unit 10 to the vehicle platoon 1 for controlling the driving behaviour of the vehicle platoon. Such control signals are preferably received by the lead vehicle 2 of the vehicle platoon, but could also be received by one or more of the following vehicles 3 of the vehicle platoon. The central control unit 10 can be part of a server of a wireless network, such as Internet, for cloud computing.

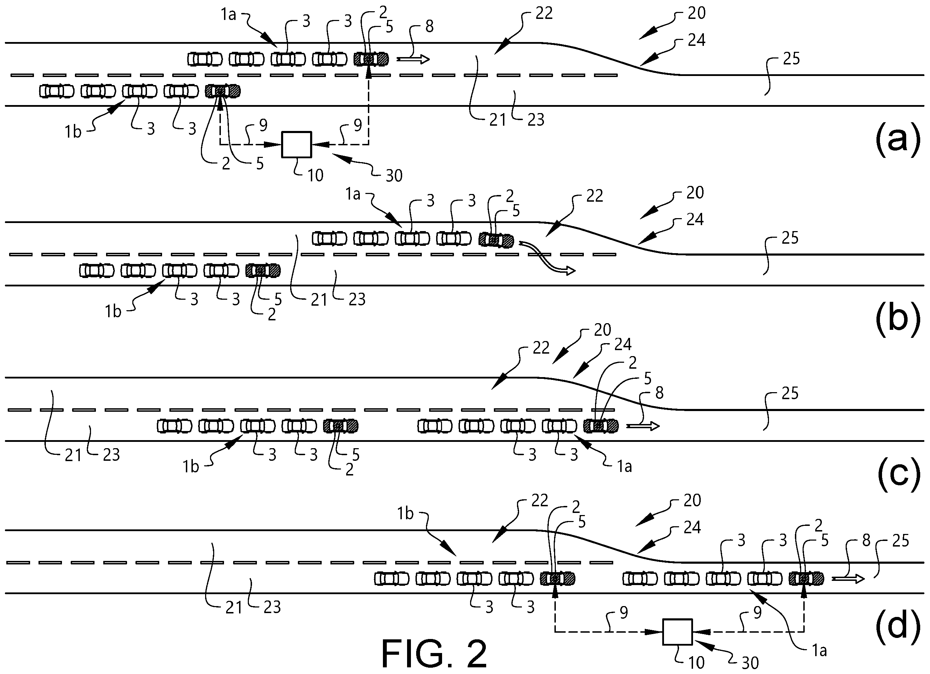

Fig. 2 shows a transportation system 20 which comprises a first vehicle platoon 1a and a second vehicle platoon 1b. Each vehicle platoon 1a, 1b has a lead vehicle 2 and a plurality of vehicles 3 following the lead vehicle 2 as described hereinabove. The transportation system 20 further comprises a control system 30 configured to control the first vehicle platoon 1a and the second vehicle platoon 1b. In the example embodiment shown in Fig. 2, the control system comprises a central control unit 10. Further, the road 22 has a first lane 21 and a second lane 23 arranged side by side to enable driving in one and the same direction 8 (from left to right in Fig. 2). The road 22 has a bottleneck section 24 where the first lane 21 and the second lane 23 merge into a single lane 25 of the road 22.

It should be stressed that the operation of the transportation system 20 described herein is preferably performed by controlling the vehicle platoons 1a, 1b by means of the equipment and control units described herein, without any assistance from any driver of any of the vehicles.

A method for operating a transportation system comprising a first vehicle platoon and a second vehicle platoon, will be described with reference to Fig. 2. Fig. 2 comprises four pictures a), b), c) and d), illustrating the first and second vehicle platoons at different points in time.

The method comprises the steps of controlling the first vehicle platoon 1a and the second vehicle platoon 1b by means of the control system 30, initially driving the first vehicle platoon 1a in the first lane 21 of the road 22 and the second vehicle platoon 1b in the second lane 23 of the road 22, and controlling the first vehicle platoon 1a and the second vehicle platoon 1b such that the first vehicle platoon and the second vehicle platoon are synchronized before reaching the bottleneck section 24 enabling the first vehicle platoon 1a and the second vehicle platoon 1b to enter the single lane 25 one after the other.

The synchronization comprises positioning of the first vehicle platoon 1a in front of the second vehicle platoon 1b before the bottleneck section 24 enabling the first vehicle platoon 1a to enter the single lane 25 before the second vehicle platoon 1b. In the example embodiment illustrated in Fig. 2, the speed of the first vehicle platoon 1a is increased relative to the speed of the second vehicle platoon 1b before the bottleneck section 24. This can be performed by increasing the speed of the first vehicle platoon and/or decreasing the speed of the second vehicle platoon. See pictures a) and b) of Fig. 2 where the first vehicle platoon 1a passes the second vehicle platoon 1b.

Thereafter, the first vehicle platoon 1a can be controlled to change from the first lane 21 to the second lane 23 of the road 22, to a position in front of the second vehicle platoon 1b, and the first vehicle platoon 1a is then driven in front of the second vehicle platoon 1b in the second lane 23 when reaching the bottleneck section 24 as illustrated in pictures c) and d) of Fig. 2. Although not illustrated, alternatively, the second vehicle platoon could be controlled to change from the second lane to the first lane of the road, to a position behind the first vehicle platoon, where the second vehicle platoon is then driven behind the first vehicle platoon in the first lane when reaching the bottleneck section 24.

The relative speed between the first vehicle platoon 1a and the second vehicle platoon 1b, and the positions of the first vehicle platoon 1a and the second vehicle platoon 1b relative to each other, are preferably controlled based on the length of the first vehicle platoon 1a, before reaching the bottleneck section 24, so as to optimize the throughput at the same time as safety can be ensured.

Alternatively, according to the invention, the first vehicle platoon and the second vehicle platoon can be synchronized such that the second vehicle platoon will enter the single lane 25 before the first vehicle platoon.

With further reference to Fig. 2, the invention also relates to a control system 30 for controlling vehicles of a transportation system 20 comprising a first vehicle platoon 1a and a second vehicle platoon 1b, where each of the first and second vehicle platoons has a lead vehicle 2 and a plurality of vehicles 3 following the lead vehicle. The control system is configured to control the first vehicle platoon 1a driving in a first lane 21 of a road 22 and the second vehicle platoon 1b driving in a second lane 23 of the road 22, and to control the first vehicle platoon 1a and the second vehicle platoon 1b such that the first vehicle platoon and the second vehicle platoon are synchronized before reaching the bottleneck section 24 enabling the first vehicle platoon 1a and the second vehicle 1b platoon to enter the single lane 25 one after the other.

The control system can suitably comprise one or more central control units 10 and/or one or more of the local control units 5, which units can be used individually and in cooperation.

In the example embodiment illustrated in Fig. 2, the control system 30 comprises a central control unit 10. The central control unit 10 is configured and arranged to communicate 9 with the vehicle platoons 1a, 1b, preferably with the control unit 5 of the lead vehicle 2 of each vehicle platoon 1a, 1b, for controlling the driving of the vehicle platoons 1a, 1b.

The central control unit 10 and the local control unit 5 arranged on a vehicle 2, 3 may comprise one or more microprocessors and/or one or more memory devices or any other components for mutual communication, and for communicating with other equipment. By means of the control units, the vehicle platoons can be controlled, and particularly computer programs to perform the method described herein can be executed. Thus, the central control unit and/or the local control unit is preferably provided with a computer program comprising program code means for performing the steps of any example embodiment of the method described herein.

Optionally, the control system may comprise a decentralized network of computers not necessarily arranged in one and the same central control unit.

Alternatively or in addition to what has been described hereinabove, sensors can be arranged in the environment to the current road where the vehicle platoons are driven. These sensors may provide information received by the control system. Such sensors could be a complement to the sensors of the vehicles for instance, giving further information and/or redundancy to the system.

It is to be understood that the present invention is not limited to the embodiments described above and illustrated in the drawings; rather, the skilled person will recognize that many changes and modifications may be made within the scope of the appended claims.

## Claims

1. A method for operating a transportation system (20) comprising a first vehicle platoon (1a) and a second vehicle platoon (1b), each of the first and second vehicle platoons having a lead vehicle (2) and a plurality of vehicles (3) following the lead vehicle, the method comprising the steps of controlling the first vehicle platoon (1a) and the second vehicle platoon (1b) by means of a control system (30), driving the first vehicle platoon (1a) in a first lane (21) of a road (22) and the second vehicle platoon (1b) in a second lane (23) of the road (22), the road comprising a bottleneck section (24) where the first lane (21) and the second lane (23) merge into a single lane (25), and controlling the first vehicle platoon (1a) and the second vehicle platoon (1b) such that the first vehicle platoon and the second vehicle platoon are synchronized before reaching the bottleneck section (24) enabling the first vehicle platoon (1a) and the second vehicle platoon (1b) to enter the single lane (25) one after the other, and positioning the first vehicle platoon (1a) in front of the second vehicle platoon (1b) before the bottleneck section (24), enabling the first vehicle platoon (1a) to enter the single lane (25) before the second vehicle platoon (1b), **characterized by** controlling the first vehicle platoon (1a) to change from the first lane (21) to the second lane (23) of the road (22), and driving the first vehicle platoon (1a) in front of the second vehicle platoon (1b) in the second lane (23) when reaching the bottleneck section (24), or controlling the second vehicle platoon (1b) to change from the second lane (23) to the first lane (21) of the road (22), and driving the second vehicle platoon (1b) behind the first vehicle platoon (1a) in the first lane (21) when reaching the bottleneck section (24).

2. A method according to claim 1, **characterized by** positioning the first vehicle platoon (1a) in front of the second vehicle platoon (1b) by increasing the speed of the first vehicle platoon (1a) relative to the speed of the second vehicle platoon (1b) before the bottleneck section (24) by increasing the speed of the first vehicle platoon (1a) and/or decreasing the speed of the second vehicle platoon (1b).

3. A method according to claim 1, **characterized by** controlling the relative speed between the first vehicle platoon (1a) and the second vehicle platoon (1b), and the positions of the first vehicle platoon (1a) and the second vehicle platoon (1b) relative to each other, based on the length of the first vehicle platoon (1a), before reaching the bottleneck section (24).

4. A control system (30) for controlling vehicles of a transportation system (20) comprising a first vehicle platoon (1a) and a second vehicle platoon (1b), each of the first and second vehicle platoons having a lead vehicle (2) and a plurality of vehicles (3) following the lead vehicle (2), the control system (30) being configured to control the first vehicle platoon (1a) driving in a first lane (21) of a road (22) and the second vehicle platoon (1b) driving in a second lane (23) of the road (22), the road comprising a bottleneck section (24) where the first lane (21) and the second lane (23) merge into a single lane (25), and the control system (30) being configured to control the first vehicle platoon (1a) and the second vehicle platoon (1b) such that the first vehicle platoon and the second vehicle platoon are synchronized before reaching the bottleneck section (24) enabling the first vehicle platoon (1a) and the second vehicle platoon (1b) to enter the single lane (25) one after the other, the control system (30) being configured to position the first vehicle platoon (1a) in front of the second vehicle platoon (1b) before the bottleneck section (24), enabling the first vehicle platoon (1a) to enter the single lane (25) before the second vehicle platoon (1b), **characterized in that** the control system (30) is configured to control the first vehicle platoon (1a) to change from the first lane (21) to the second lane (23) of the road (22), and to drive the first vehicle platoon (1a) in front of the second vehicle platoon (1b) in the second lane (23) when reaching the bottleneck section (24), or the control system (30) is configured to control the second vehicle platoon (1b) to change from the second lane (23) to the first lane (21) of the road (22), and to drive the second vehicle platoon (1b) behind the first vehicle platoon (1a) in the first lane (21) when reaching the bottleneck section (24).

5. A control system according to claim 4, **characterized in that** the control system (30) is configured to position the first vehicle platoon (1a) in front of the second vehicle platoon (1b) by increasing the speed of the first vehicle platoon (1a) relative to the speed of the second vehicle platoon (1b) before the bottleneck section (24) by increasing the speed of the first vehicle platoon (1a) and/or decreasing the speed of the second vehicle platoon (1b).

6. A control system according to claim 4, **characterized in that** the control system (30) is configured to control the relative speed between the first vehicle platoon (1a) and the second vehicle platoon (1b), and the positions of the first vehicle platoon (1a) and the second vehicle platoon (1b) relative to each other, based on the length of the first vehicle platoon (1a), before reaching the bottleneck section (24).

7. A computer program comprising program code means for performing a method according to any of claims 1-3.

8. A transportation system (20) comprising a first vehicle platoon (1a) and a second vehicle platoon (1b), each of the first and second vehicle platoons having a lead vehicle (2) and a plurality of vehicles (3) following the lead vehicle (2), and a control system (30) configured to control the first vehicle platoon (1a) driving in a first lane (21) of a road (22) and the second vehicle platoon (1b) driving in a second lane (23) of the road (22), the road comprising a bottleneck section (24) where the first lane (21) and the second lane (23) merge into a single lane (25), and the control system (30) being configured to control the first vehicle platoon (1a) and the second vehicle platoon (1b) such that the first vehicle platoon and the second vehicle platoon are synchronized before reaching the bottleneck section (24) enabling the first vehicle platoon (1a) and the second vehicle platoon (1b) to enter the single lane (25) one after the other, the control system (30) being configured to position the first vehicle platoon (1a) in front of the second vehicle platoon (1b) before the bottleneck section (24), enabling the first vehicle platoon (1a) to enter the single lane (25) before the second vehicle platoon (1b), **characterized in that** the control system (30) is configured to control the first vehicle platoon (1a) to change from the first lane (21) to the second lane (23) of the road (22), and to drive the first vehicle platoon (1a) in front of the second vehicle platoon (1b) in the second lane (23) when reaching the bottleneck section (24), or the control system (30) is configured to control the second vehicle platoon (1b) to change from the second lane (23) to the first lane (21) of the road (22), and to drive the second vehicle platoon (1b) behind the first vehicle platoon (1a) in the first lane (21) when reaching the bottleneck section (24).

9. A transportation system according to claim 8, **characterized in that** the control system (30) is configured to position the first vehicle platoon (1a) in front of the second vehicle platoon (1b) before the bottleneck section (24) enabling the first vehicle platoon (1a) to enter the single lane (25) before the second vehicle platoon (1b), and to control the relative speed between the first vehicle platoon (1a) and the second vehicle platoon (1b), and the positions of the first vehicle platoon (1a) and the second vehicle platoon (1b) relative to each other, based on the length of the first vehicle platoon (1a), before reaching the bottleneck section (24).

## Patentansprüche

1. Verfahren zum Betreiben eines Transportsystems (20), umfassend einen ersten Fahrzeugzug (1a) und einen zweiten Fahrzeugzug (1b), wobei jeder des ersten und des zweiten Fahrzeugzugs ein Führungsfahrzeug (2) und eine Vielzahl von Fahrzeugen (3), die dem Führungsfahrzeug folgen, aufweist, wobei das Verfahren die folgenden Schritte umfasst: Steuern des ersten Fahrzeugzugs (1a) und des zweiten Fahrzeugzugs (1b) mittels eines Steuersystems (30), Fahren des ersten Fahrzeugzugs (1a) auf einer ersten Spur (21) einer Straße (22) und des zweiten Fahrzeugzugs (1b) auf einer zweiten Spur (23) der Straße (22), wobei die Straße einen Engstellenabschnitt (24) umfasst, an dem die erste Spur (21) und die zweite Spur (23) zu einer Einzelspur (25) zusammenlaufen, und Steuern des ersten Fahrzeugzugs (1a) und des zweiten Fahrzeugzugs (1b) derart, dass der erste Fahrzeugzug und der zweite Fahrzeugzug vor Erreichen des Engstellenabschnitts (24) synchronisiert werden, was es dem ersten Fahrzeugzug (1a) und dem zweiten Fahrzeugzug (1b) ermöglicht, nacheinander in die Einzelspur (25) einzufahren, und Positionieren des ersten Fahrzeugzugs (1a) vor dem zweiten Fahrzeugzug (1b) vor dem Engstellenabschnitt (24), was es dem ersten Fahrzeugzug (1a) ermöglicht, (25) vor dem zweiten Fahrzeugzug (1b) in die Einzelspur einzufahren, **gekennzeichnet durch** Steuern des ersten Fahrzeugzugs (1a), um von der ersten Spur (21) auf die zweite Spur (23) der Straße (22) zu wechseln, und Fahren des ersten Fahrzeugzugs (1a) bei Erreichen des Engstellenabschnitts (24) vor dem zweiten Fahrzeugzug (1b) auf der zweiten Spur (23), oder Steuern des zweiten Fahrzeugzugs (1b), um von der zweiten Spur (23) auf die erste Spur (21) der Straße (22) zu wechseln, und Fahren des zweiten Fahrzeugzugs (1b) bei Erreichen des Engstellenabschnitts (24) hinter dem ersten Fahrzeugzug (1a) auf der ersten Spur (21).

2. Verfahren nach Anspruch 1, **gekennzeichnet durch** Positionieren des ersten Fahrzeugzugs (1a) vor dem zweiten Fahrzeugzug (1b) durch Erhöhen der Geschwindigkeit des ersten Fahrzeugzugs (1a) relativ zu der Geschwindigkeit des zweiten Fahrzeugzugs (1b) vor dem Engstellenabschnitt (24) durch Erhöhen der Geschwindigkeit des ersten Fahrzeugzugs (1a) und/oder Verringern der Geschwindigkeit des zweiten Fahrzeugzugs (1b).

3. Verfahren nach Anspruch 1, **gekennzeichnet durch** Steuern der relativen Geschwindigkeit zwischen dem ersten Fahrzeugzug (1a) und dem zweiten Fahrzeugzug (1b) und der Positionen des ersten Fahrzeugzugs (1a) und des zweiten Fahrzeugzugs (1b) relativ zueinander basierend auf der Länge des ersten Fahrzeugzugs (1a) vor Erreichen des Engstellenabschnitts (24).

4. Steuersystem (30) zum Steuern von Fahrzeugen eines Transportsystems (20), umfassend einen ersten Fahrzeugzug (1a) und einen zweiten Fahrzeugzug (1b), wobei jeder des ersten und des zweiten Fahrzeugzugs ein Führungsfahrzeug (2) und eine Vielzahl von Fahrzeugen (3), die dem Führungsfahrzeug (2) folgen, aufweist, wobei das Steuersystem (30) dazu konfiguriert ist, den ersten Fahrzeugzug (1a), der auf einer ersten Spur (21) einer Straße (22) fährt, und den zweiten Fahrzeugzug (1b), der auf einer zweiten Spur (23) der Straße (22) fährt, zu steuern, wobei die Straße einen Engstellenabschnitt (24) umfasst, an dem die erste Spur (21) und die zweite Spur (23) zu einer Einzelspur (25) zusammenlaufen, und das Steuersystem (30) dazu konfiguriert ist, den ersten Fahrzeugzug (1a) und den zweiten Fahrzeugzug (1b) derart zu steuern, dass der erste Fahrzeugzug und der zweite Fahrzeugzug vor Erreichen des Engstellenabschnitts (24) synchronisiert werden, was es dem ersten Fahrzeugzug (1a) und dem zweiten Fahrzeugzug (1b) ermöglicht, nacheinander in die Einzelspur (25) einzufahren, wobei das Steuersystem (30) dazu konfiguriert ist, den ersten Fahrzeugzug (1a) vor dem zweiten Fahrzeugzug (1b) vor dem Engstellenabschnitt (24) zu positionieren, was es dem ersten Fahrzeugzug (1a) ermöglicht, vor dem zweiten Fahrzeugzug (1b) in die Einzelspur (25) einzufahren, **dadurch gekennzeichnet, dass** das Steuersystem (30) dazu konfiguriert ist, den ersten Fahrzeugzug (1a) zu steuern, um von der ersten Spur (21) auf die zweite Spur (23) der Straße (22) zu wechseln, und den ersten Fahrzeugzug (1a) bei Erreichen des Engstellenabschnitts (24) vor dem zweiten Fahrzeugzug (1b) auf der zweiten Spur (23) zu fahren, oder das Steuersystem (30) dazu konfiguriert ist, den zweiten Fahrzeugzug (1b) zu steuern, um von der zweiten Spur (23) auf die erste Spur (21) der Straße (22) zu wechseln, und den zweiten Fahrzeugzug (1b) bei Erreichen des Engstellenabschnitts (24) hinter dem ersten Fahrzeugzug (1a) auf der ersten Spur (21) zu fahren.

5. Steuersystem nach Anspruch 4, **dadurch gekennzeichnet, dass** das Steuersystem (30) dazu konfiguriert ist, den ersten Fahrzeugzug (1a) vor dem zweiten Fahrzeugzug (1b) durch Erhöhen der Geschwindigkeit des ersten Fahrzeugzugs (1a) relativ zu der Geschwindigkeit des zweiten Fahrzeugzugs (1b) vor dem Engstellenabschnitt (24) durch Erhöhen der Geschwindigkeit des ersten Fahrzeugzugs (1a) und/oder Verringern der Geschwindigkeit des zweiten Fahrzeugzugs (1b) zu positionieren.

6. Steuersystem nach Anspruch 4, **dadurch gekennzeichnet, dass** das Steuersystem (30) dazu konfiguriert ist, vor Erreichen des Engstellenabschnitts (24) die relative Geschwindigkeit zwischen dem ersten Fahrzeugzug (1a) und dem zweiten Fahrzeugzug (1b) und die Positionen des ersten Fahrzeugzugs (1a) und des zweiten Fahrzeugzugs (1b) relativ zueinander basierend auf der Länge des ersten Fahrzeugzugs (1a) zu steuern.

7. Computerprogramm, umfassend Programmcodemittel zum Durchführen eines Verfahrens nach einem der Ansprüche 1-3.

8. Transportsystem (20), umfassend einen ersten Fahrzeugzug (1a) und einen zweiten Fahrzeugzug (1b), wobei jeder des ersten und des zweiten Fahrzeugzugs ein Führungsfahrzeug (2) und eine Vielzahl von Fahrzeugen (3), die dem Führungsfahrzeug (2) folgen, aufweist, und ein Steuersystem (30) dazu konfiguriert ist, den ersten Fahrzeugzug (1a), der auf einer ersten Spur (21) einer Straße (22) fährt, und den zweiten Fahrzeugzug (1b), der auf einer zweiten Spur (23) der Straße (22) fährt, zu steuern, wobei die Straße einen Engstellenabschnitt (24) umfasst, an dem die erste Spur (21) und die zweite Spur (23) zu einer Einzelspur (25) zusammenlaufen, und das Steuersystem (30) dazu konfiguriert ist, den ersten Fahrzeugzug (1a) und den zweiten Fahrzeugzug (1b) derart zu steuern, dass der erste Fahrzeugzug und der zweite Fahrzeugzug vor Erreichen des Engstellenabschnitts (24) synchronisiert werden, was es dem ersten Fahrzeugzug (1a) und dem zweiten Fahrzeugzug (1b) ermöglicht, nacheinander in die Einzelspur (25) einzufahren, wobei das Steuersystem (30) dazu konfiguriert ist, den ersten Fahrzeugzug (1a) vor dem zweiten Fahrzeugzug (1b) vor dem Engstellenabschnitt (24) zu positionieren, was es dem ersten Fahrzeugzug (1a) ermöglicht, vor dem zweiten Fahrzeugzug (1b) in die Einzelspur (25) einzufahren, **dadurch gekennzeichnet, dass** das Steuersystem (30) dazu konfiguriert ist, den ersten Fahrzeugzug (1a) zu steuern, um von der ersten Spur (21) auf die zweite Spur (23) der Straße (22) zu wechseln, und den ersten Fahrzeugzug (1a) bei Erreichen des Engstellenabschnitts (24) vor den zweiten Fahrzeugzug (1b) auf der zweiten Spur (23) zu fahren, oder das Steuersystem (30) dazu konfiguriert ist, den zweiten Fahrzeugzug (1b) zu steuern, um von der zweiten Spur (23) auf die erste Spur (21) der Straße (22) zu wechseln, und den zweiten Fahrzeugzug (1b) bei Erreichen des Engstellenabschnitts (24) hinter dem ersten Fahrzeugzug (1a) auf der ersten Spur (21) zu fahren.

9. Transportsystem nach Anspruch 8, **dadurch gekennzeichnet, dass** das Steuersystem (30) dazu konfiguriert ist, den ersten Fahrzeugzug (1a) vor dem zweiten Fahrzeugzug (1b) vor dem Engstellenabschnitt (24) zu positionieren, was es dem ersten Fahrzeugzug (1a) ermöglicht, vor dem zweiten Fahrzeugzug (1b) in die Einzelspur (25) einzufahren, und die relative Geschwindigkeit zwischen dem ersten Fahrzeugzug (1a) und dem zweiten Fahrzeugzug (1b) und die Positionen des ersten Fahrzeugzugs (1a) und des zweiten Fahrzeugzugs (1b) relativ zu einander basierend auf der Länge des ersten Fahrzeugzugs (1a) vor Erreichen des Engstellenabschnitts (24) zu steuern.

## Revendications

1. Procédé de fonctionnement d'un système de transport (20) comprenant un premier peloton de véhicules (1a) et un second peloton de véhicules (1b), chacun des premier et second pelotons de véhicules ayant un véhicule de tête (2) et une pluralité de véhicules (3) suivant le véhicule de tête, le procédé comprenant les étapes de commande du premier peloton de véhicules (1a) et du second peloton de véhicules (1b) au moyen d'un système de commande (30), de conduite du premier peloton de véhicules (1a) dans une première voie (21) d'une route (22) et du second peloton de véhicules (1b) dans une seconde voie (23) de la route (22), la route comprenant une section de goulot d'étranglement (24) où la première voie (21) et la seconde voie (23) fusionnent en une voie unique (25), et de commande du premier peloton de véhicules (1a) et du second peloton de véhicules (1b) de telle sorte que le premier peloton de véhicules et le second peloton de véhicules soient synchronisés avant d'atteindre la section de goulot d'étranglement (24), permettant au premier peloton de véhicules (1a) et au second peloton de véhicules (1b) d'entrer dans la voie unique (25) l'un après l'autre, et de positionnement du premier peloton de véhicules (1a) devant le second peloton de véhicules (1b) avant la section de goulot d'étranglement (24), permettant au premier peloton de véhicules (1a) d'entrer dans la voie unique (25) avant le second peloton de véhicules (1b), **caractérisé par** la commande du premier peloton de véhicules (1a) pour passer de la première voie (21) à la seconde voie (23) de la route (22), et la conduite du premier peloton de véhicules (1a) devant le second peloton de véhicules (1b) dans la seconde voie (23) lorsqu'il atteint la section de goulot d'étranglement (24), ou la commande du second peloton de véhicules (1b) pour passer de la seconde voie (23) à la première voie (21) de la route (22), et la conduite du second peloton de véhicules (1b) derrière le premier peloton de véhicules (1a) dans la première voie (21) lorsqu'il atteint la section de goulot d'étranglement (24).

2. Procédé selon la revendication 1, **caractérisé par** le positionnement du premier peloton de véhicules (1a) devant le second peloton de véhicules (1b) en augmentant la vitesse du premier peloton de véhicules (1a) par rapport à la vitesse du second peloton de véhicules (1b) avant la section de goulot d'étranglement (24) en augmentant la vitesse du premier peloton de véhicules (1a) et/ou en diminuant la vitesse du second peloton de véhicules (1b).

3. Procédé selon la revendication 1, **caractérisé par** la commande de la vitesse relative entre le premier peloton de véhicules (1a) et le second peloton de véhicules (1b), et des positions du premier peloton de véhicules (1a) et du second peloton de véhicules (1b) l'un par rapport à l'autre, sur la base de la longueur du premier peloton de véhicules (1a), avant d'atteindre la section de goulot d'étranglement (24).

4. Système de commande (30) pour commander des véhicules d'un système de transport (20) comprenant un premier peloton de véhicules (1a) et un second peloton de véhicules (1b), chacun des premier et second pelotons de véhicules ayant un véhicule de tête (2) et une pluralité de véhicules (3) suivant le véhicule de tête (2), le système de commande (30) étant configuré pour commander le premier peloton de véhicules (1a) circulant dans une première voie (21) d'une route (22) et le second peloton de véhicules (1b) circulant dans une seconde voie (23) de la route (22), la route comprenant une section de goulot d'étranglement (24) où la première voie (21) et la seconde voie (23) fusionnent en une voie unique (25), et le système de commande (30) étant configuré pour commander le premier peloton de véhicules (1a) et le second peloton de véhicules (1b) de telle sorte que le premier peloton de véhicules et le second peloton de véhicules soient synchronisés avant d'atteindre la section de goulot d'étranglement (24), permettant au premier peloton de véhicules (1a) et au second peloton de véhicules (1b) d'entrer dans la voie unique (25) l'un après l'autre, le système de commande (30) étant configuré pour positionner le premier peloton de véhicules (1a) devant le second peloton de véhicules (1b) avant la section de goulot d'étranglement (24), permettant au premier peloton de véhicules (1a) d'entrer dans la voie unique (25) avant le second peloton de véhicules (1b), **caractérisé en ce que** le système de commande (30) est configuré pour commander le premier peloton de véhicules (1a) pour passer de la première voie (21) à la seconde voie (23) de la route (22), et pour conduire le premier peloton de véhicules (1a) devant le second peloton de véhicules (1b) dans la seconde voie (23) lorsqu'il atteint la section de goulot d'étranglement (24), ou le système de commande (30) est configuré pour commander le second peloton de véhicules (1b) pour passer de la seconde voie (23) à la première voie (21) de la route (22), et pour conduire le second peloton de véhicules (1b) derrière le premier peloton de véhicules (1a) dans la première voie (21) lorsqu'il atteint la section de goulot d'étranglement (24).

5. Système de commande selon la revendication 4, **caractérisé en ce que** le système de commande (30) est configuré pour positionner le premier peloton de véhicules (1a) devant le second peloton de véhicules (1b) en augmentant la vitesse du premier peloton de véhicules (1a) par rapport à la vitesse du second peloton de véhicules (1b) avant la section de goulot d'étranglement (24) en augmentant la vitesse du premier peloton de véhicules (1a) et/ou en diminuant la vitesse du second peloton de véhicules (1b).

6. Système de commande selon la revendication 4, **caractérisé en ce que** le système de commande (30) est configuré pour commander la vitesse relative entre le premier peloton de véhicules (1a) et le second peloton de véhicules (1b), et les positions du premier peloton de véhicules (1a) et du second peloton de véhicules (1b) l'un par rapport à l'autre, sur la base de la longueur du premier peloton de véhicules (1a), avant d'atteindre la section de goulot d'étranglement (24).

7. Programme informatique comprenant un moyen de code de programme pour exécuter un procédé selon l'une quelconque des revendications 1 à 3.

8. Système de transport (20) comprenant un premier peloton de véhicules (1a) et un second peloton de véhicules (1b), chacun des premier et second pelotons de véhicules ayant un véhicule de tête (2) et une pluralité de véhicules (3) suivant le véhicule de tête (2), et un système de commande (30) configuré pour commander le premier peloton de véhicules (1a) circulant dans une première voie (21) d'une route (22) et le second peloton de véhicules (1b) circulant dans une seconde voie (23) de la route (22), la route comprenant une section de goulot d'étranglement (24) où la première voie (21) et la seconde voie (23) fusionnent en une voie unique (25), et le système de commande (30) étant configuré pour commander le premier peloton de véhicules (1a) et le second peloton de véhicules (1b) de telle sorte que le premier peloton de véhicules et le second peloton de véhicules soient synchronisés avant d'atteindre la section de goulot d'étranglement (24), permettant au premier peloton de véhicules (1a) et au second peloton de véhicules (1b) d'entrer dans la voie unique (25) l'un après l'autre, le système de commande (30) étant configuré pour positionner le premier peloton de véhicules (1a) devant le second peloton de véhicules (1b) avant la section de goulot d'étranglement (24), permettant au premier peloton de véhicules (1a) d'entrer dans la voie unique (25) avant le second peloton de véhicules (1b), **caractérisé en ce que** le système de commande (30) est configuré pour commander le premier peloton de véhicules (1a) pour passer de la première voie (21) à la seconde voie (23) de la route (22), et pour conduire le premier peloton de véhicules (1a) devant le second peloton de véhicules (1b) dans la seconde voie (23) lorsqu'il atteint la section de goulot d'étranglement (24), ou le système de commande (30) est configuré pour commander le second peloton de véhicules (1b) pour passer de la seconde voie (23) à la première voie (21) de la route (22), et pour conduire le second peloton de véhicules (1b) derrière le premier peloton de véhicules (1a) dans la première voie (21) lorsqu'il atteint la section de goulot d'étranglement (24).

9. Système de transport selon la revendication 8, **caractérisé en ce que** le système de commande (30) est configuré pour positionner le premier peloton de véhicules (1a) devant le second peloton de véhicules (1b) avant la section de goulot d'étranglement (24) permettant au premier peloton de véhicules (1a) d'entrer dans la voie unique (25) avant le second peloton de véhicules (1b), et pour commander la vitesse relative entre le premier peloton de véhicules (1a) et le second peloton de véhicules (1b), et les positions du premier peloton de véhicules (1a) et du second peloton de véhicules (1b) l'un par rapport à l'autre, sur la base de la longueur du premier peloton de véhicules (1a), avant d'atteindre la section de goulot d'étranglement (24).
